# FASCICULE DE BREVET EUROPEEN

(11) **EP 1 068 895 B1**
(45) Date de publication et mention de la délivrance du brevet: **20.08.2003**
(21) Numéro de dépôt: 00203104.5
(22) Date de dépôt: 15.10.1997
(51) Int. Cl.: B01F 17/00, C11D 3/00

(54) **Compositions anhydres d'alkylpolyglycosides et d'alcools gras alkoxylés**
Wasserfreie Zusammensetzungen aus Alkylpolyglykosiden und alkoxylierten Fettalkoholen
Anhydrous compositions from alkylpolyglycosides and alkoxylated fatty alcohols

(30) Priorité: 22.10.1996 FR 9612819
(43) Date de publication de la demande: 17.01.2001
(62) Demande divisionnaire de: 97910485.8
(73) Titulaire: SOCIETE D'EXPLOITATION DE PRODUITS POUR LES INDUSTRIES CHIMIQUES, S.E.P.P.I.C., 75321 Paris Cédex 07 (FR)
(72) Inventeur: Millius, Alain, 06000 Nice (FR); Boiteux, Jean-Pierre, 81710 Saix (FR); Carrausse, Maryse, 81100 Castres (FR)
(74) Mandataire: Conan, Philippe Claude

(56) Documents cités:
- WO-A-91/14760

## Description

La présente demande de brevet est une demande divisionnaire de la demande de brevet européen n° 97910485.6.

La présente invention concerne des compositions anhydres intermédiaires aptes à la préparation de compositions anti-mousse.

Certaines opérations de nettoyage industriel telles que le nettoyage des bouteilles ou le nettoyage en place peuvent entraîner la formation d'une mousse importante. Elle est notamment due à la présence de salissures alimentaires ou de résidus de colle présents sur les bouteilles. En vue de diminuer, voire d'empêcher la formation de cette mousse, il est connu d'ajouter à la composition nettoyante un ou plusieurs tensioactifs démoussants. Ces tensioactifs démoussants sont généralement du type non-ionique.

Un des objets de la présente invention consiste en de nouvelles compositions tensioactives dérivées des alkylpoly-glycosides.

Les alkylpolyglycosides sont des tensioactifs non-ioniques bien connus. Leur procédé de fabrication est par exemple décrit dans la demande de brevet EP-A-0 077 167.

Toutefois, à ce jour, il est impossible d'utiliser des compositions tensioactives à base d'alkylpolyglycosides qui soient exemptes d'eau ou exemptes d'alcool gras. En effet, les températures de fusion très élevées des alkylpolyglycosides ne permettent pas de les manipuler sous forme anhydre. Ils sont donc dilués dans l'eau ou présentés en mélange avec un ou des alcools gras.

La demande de brevet EP-A-0 489 777 décrit des compositions anti-mousse comprenant des alkylpolyglycosides dont la chaîne alkyle comprend de 6 à 12 atomes de carbone.

La demande internationale de brevet WO 91/14760 décrit un mélange peu moussant anhydre d'alkylpolyglycosides et d'alcools gras polyalkoxylés éventuellement bloqués par des restes alkyles C₁ à C₁₀.

La demande de brevet allemand n° DE 3 835 199 décrit des alkylpolyglycosides bloqués par un radical arylméthyle ou alkyle présentant des propriétés anti-mousse.

Cependant, il est clair pour l'homme du métier que la réaction de blocage mise en oeuvre dans cette publication ne peut pas s'appliquer aux nombreux réactifs de blocage qui se décomposent dans l'eau. Dans un autre aspect de la présente invention, la Demanderesse a donc cherché à développer un nouveau procédé de blocage qui passe par des intermédiaires anhydres et exempts d'alcools gras.

L'invention a donc pour objet une composition anhydre (D) consistant essentiellement en :
a) un ou plusieurs composés de formule (III₁)

   (G)ₓ-O-R_{A} (III₁)

   et
b) un ou plusieurs composés de formule (IV₁)

   HO-[CH₂-CH(R₁)-O]ₙ-R_{A} (IV₁)

   x représente un nombre décimal compris entre 1 et 5,
   n est un nombre entier compris entre 1 et 30,
   R₁ représente un atome d'hydrogène ou un radical méthyle,
   G représente le reste du glucose;
   R_{A} représente un radical hydrocarboné, linéaire ou ramifié, saturé ou insaturé, comprenant de 1 à 30 atomes de carbone, susceptible d'être obtenue en mélangeant du glucose à une coupe d'alcools gras, correspondant à un mélange d'alcools de formule (VI) :

   HO-R_{A} (VI)

   pour former le mélange correspondant (B₁) d'alkyl polyglucosides de formules (III₁) et de l'excès de la coupe d'alcools gras, en ajoutant audit mélange (B₁) un mélange de composés alkoxylés de formules (IV₁) préparé à partir de la même coupe d'alcools gras dans un rapport pondéral composés de formule (III₁)/composés de formules (IV₁) compris entre 0,2 et 5, pour former un mélange (C₁) qui est neutralisé puis soumis à une distillation pour éliminer l'excès d'alcool de formule (VI).

Par reste du glucose, on désigne pour G un radical bivalent résultant de l'enlèvement sur une molécule de glucose, d'une part d'un atome d'hydrogène d'un groupe hydroxyle et d'autre du groupe hydroxyle anomérique.

La structure oliogomérique (G)ₓ peut se présenter sous toute forme d'isomèrie, qu'il s'agisse d'isomèrie optique, d'isomèrie géométrique ou d'isomérie de position ; elle peut aussi représenter un mélange d'isomères.
Dans la formule (III₁) telle que définie précédemment, le groupe O-R_{A} est lié à G par le carbone anomérique de manière à former une fonction acétal.

Dans la définition de la formule (IV₁), le groupe -[CH₂-CH(R₁)-O]ₙ indique qu'il peut s'agir soit d'une chaîne composée uniquement de groupes éthoxyle (R₁=H), soit d'une chaîne composée uniquement de groupes propoxyle (R₁=CH₃), soit d'une chaîne composée à la fois de groupes éthoxyle et propoxyle. Dans ce dernier cas, les fragments -CH₂-CH₂O et -CH₂CH(CH₃)-O sont distribués de manière séquencée ou aléatoire.

Lorsque dans la composition telle que définie précédemment, il y a plusieurs composés de formules (III₁) et/ou (IV₁), ils se différencient entre eux par la définition de R_{A}.

Dans une première variante préférée de la présente invention, x, qui représente le degré moyen de polymérisation du glucose est compris entre 1,05 et 2,5 et notamment entre 1,1 et 2,0.

Dans une deuxième variante préférée de la présente invention, dans la formule (IV₁), n est inférieur ou égal à 15.

Dans une troisième variante préférée de la présente invention, dans les formules (III₁) et/ou (IV₁), R_{A} comporte de 6 à 18 atomes de carbone et représente notamment un radical hexyte, heptyle, octyle, nonyle, décyle, undécyle, dodécyle, tridécyle, tétradécyle, hexadécyle, octadécycle, octadécènyle, octadécadiènyle ou octadécatriènyle, lesdits radicaux étant linéaires ou ramifiés.

L'invention a particulièrement pour objet la composition anhydre (D), telle que décrite précédemment, comprenant un ou plusieurs composés (III₁) et un ou plusieurs composés de formules (IV₁) pour laquelle dans les formules (III₁) et (IV₁), le substituant R_{A} représente un radical octyle, nonyle, décycle ou 2-éthyl-hexyle.

L'invention a aussi pour objet un procédé de préparation de la composition anhydre (D) telle que définie précédemment caractérisé en ce que le glucose est mis en réaction en milieu acide avec un excès d'au moins un alcool de formule (VI), pour former le mélange (B₁) comprenant au moins un composé de formule (III₁) et le mélange en excès d'au moins un alcool de formule (VI), mélange (B₁) auquel est ajouté au moins un composé de formule (IV₁) préparé à partir de la même coupe d'alcools gras dans un rapport pondéral composé de formule (III₁) / composés de formules (IV₁) compris entre 0,2 et 5 pour former un mélange (C₁) qui est neutralisé puis soumis à une étape de distillation pour éliminer l'excès d'alcool de formule (VI).

Dans une variante du procédé décrit ci-dessus, lorsque R_{A} représente le radical dérivé d'un alcool gras, le composé de formule (III₁) peut être obtenu en préparant d'abord un alkylpolyglycoside avec un alcool léger tel que le méthanol ou le butanol par éthérification de l'ose correspondant puis, dans une deuxième étape, en effectuant une transéthérification avec l'alcool de formule (VI) et en distillant l'alcool léger.

Les composés de formules (VI) sont connus de l'homme du métier et disponibles dans le commerce. Les coupes d'alcools gras sont-elles aussi connues de l'homme du métier ; certaines sont disponibles dans le commerce ou peuvent être obtenues selon des méthodes classiques à partir de graisses ou d'huiles naturelles telles que par exemple, l'huile de coprah, l'huile de palmiste, l'huile de palme, l'huile de soja, l'huile de colza, l'huile de ricin, le suif de boeuf ou l'huile de hareng.

Les composés alkoxylés de formules (IV₁) sont disponibles dans le commerce ou obtenus par action de l'oxyde d'éthylène et/ou l'oxyde de propylène sur les alcools correspondants selon des méthodes classique connues de l'homme du métier.

la composition anhydre (D) objet de l'invention, est tensioactive et elle présente aussi des propriétés anti-mousse intéressantes. Cette propriété rend son utilisation possible dans de nombreux types d'industrie.

Dans l'industrie agro-alimentaire, ces produits peuvent être utilisés dans le nettoyage et la désinfection des récipients pouvant se trouver au contact des denrées alimentaires ; ils peuvent être aussi utilisés comme anti-mousse dans les industries agro-alimentaires d'extraction telles que les sucreries ou les amidonneries, dans les industries de fermentation telles que les usines de production d'acides aminés, d'acides organiques ou d'enzymes et dans les industries des aliments du bétail.

De manière générale, la composition anhydre (D) selon l'invention peut être utilisée dans le nettoyage des surfaces dures.

Ces produits peuvent enfin être utilisés dans les formulations détergentes à usage domestique telles que les produits d'entretien ménagers.

Chacune des utilisations citées précédemment représente en elle-même un aspect de la présente invention.

Les exemples suivants illustrent l'invention sans toutefois la limiter.

### Exemple de préparation d'une composition selon l'invention

### A) Préparation d'une composition D

a) on fait réagir un mélange d'alcools gras comprenant 50 % en poids d'octanol et 50 % en poids de décanol avec du glucose monohydraté dans un rapport molaire alcools/glucose = 2,6/1, en catalyse acide. On obtient un mélange de 55 % en poids d'APG en C₈-C₁₀ ayant un degré de polymérisation égal à environ 1,9 et de 45 % d'alcools gras libre.
b) On fait réagir un mélange d'alcools gras comprenant
   50 % en poids d'octanol et 50 % de décanol avec de l'oxyde d'éthylène puis de l'oxyde de propylène de façon à obtenir sur chacun des alcools une pentaéthoxylation puis une tétrapropoxylation.
c) On prépare ensuite un mélange comportant environ 1/3 d'alcool polyalkoxylés préparés au stade b) et 2/3 du mélange APG + alcool gras préparé au stade a) ; le mélange est neutralisé jusqu'à pH = 5,6 puis les alcools gras éliminés par distillation.

On obtient ainsi une composition anhydre (D₁ₐ) APG/alcools polyalkoxylés ayant un indice d'OH égal à 471 correspondant à une composition (D₁) dans laquelle, pour les formules (III₁) et (IV₁),
G représente un reste du glucose
x est égal à 1,9
R_{A} représente un radical octyle ou un radical décyle,
n est égal à 9, et,
R₁ représente un atome d'hydrogène ou un radical méthyle

En opérant d'une manière analogue à l'exemple A à partir d'une coupe d'alcools en C₁₂-C₁₆ dans un rapport molaire avec le glucose de 4/1 et une alkoxylation à 6 moles d'oxyde d'éthylène, on a préparé la composition anhydre (D_{1b}) APG/alcools polyalkoxylés, correspondant à une composition (D₁) dans laquelle pour les formules (III₁) et (IV₁),
G représente un reste du glucose
x est égal à 1,45
R_{A} représente un radical dodécyle, un radical tétradécyle ou un radical hexadécyle
m est égal à 6 et
R₁ représente un atome d'hydrogène.

## Revendications

1. Composition anhydre (D) consistant essentiellement en :
a) un ou plusieurs composés de formule (III₁)
(G)ₓ-O-R_{A} (III₁)
et
b) un ou plusieurs composés de formule (IV₁)
HO-[CH₂-CH(R₁)-O]ₙ-R_{A} (IV₁)
x représente un nombre décimal compris entre 1 et 5.
n est un nombre entier compris entre 1 et 30
R₁ représente un atome d'hydrogène ou un radical méthyle.
G représente le reste du glucose,
R_{A} représente un radical hydrocarboné, linéaire ou ramifié, saturé ou insaturé, comprenant de 1 à 30 atomes de carbone,
susceptible d'être obtenue en mélangeant du glucose à une coupe d'alcools gras, correspondant à un mélange d'alcools de formule (VI) :
HO-R_{A} (VI)
pour former le mélange correspondant (B₁) d'alkyl polyglucosides de formules (III₁),et de l'excès de la coupe d'alcools gras, en ajoutant audit mélange (B₁) un mélange de composés alkoxylés de formules (IV₁) préparé à partir de la même coupe d'alcools gras dans un rapport pondéral composés de formule (III₁)/composés de formules (IV₁) compris entre 0,2 et 5, pour former un mélange (C₁) qui est neutralisé puis soumis à une distillation, pour éliminer l'éxcès d'alcool de formule (VI).

2. Composition selon la revendication 1 pour laquelle dans la formule (III₁), x est compris entre 1,05 et 2,5 et notamment entre 1,1 et 2,0.

3. Composition selon l'une des revendications 1 ou 2 pour laquelle, dans la formule (IV₁), n est inférieur ou égal à 15.

4. Composition selon l'une des revendications 1 à 3 pour laquelle, dans les formules (III₁) et (IV₁), R_{A} comporte de 6 à 18 atomes de carbone et représente notamment un radical hexyle, octyle, heptyle, nonyle, décyle, undécyle, dodécyle, tridécyle, tétradécyle, hexadécyle, octadécycle, octadécènyle, octadécadiényle ou octadécatriènyle, lesdits radicaux étant linéaires ou ramifiés.

5. Composition selon la revendication 4 pour laquelle, comprenant un ou plusieurs composés (III₁) et un ou plusieurs composés de formules (IV₁) pour laquelle dans les formules (III₁) et (IV₁), le substituant R_{A} représente un radical octyle, nonyle, décycle ou 2-éthyl-hexyle..

6. Procédé de préparation de la composition anhydre (D) telle que définie à l'une des revendications 1 à 5, **caractérisé en ce que** le glucose est mis en réaction en milieu acide avec un excès d'au moins un alcool de formule (VI), pour former le mélange (B₁) comprenant au moins un composé de formule (III₁) et le mélange en excès d'au moins un alcool de formule (VI), mélange (B₁) auquel est ajouté au moins un composé de formule (IV₁) préparé à partir de la même coupe d'alcools gras dans un rapport pondéral composé de formule (III₁) / composés de formules (IV₁) compris entre 0,2 et 5 pour former un mélange (C₁) qui est neutralisé puis soumis à une étape de distillation pour éliminer l'excès d'alcool de formule (VI).

7. Utilisation de la composition telle que définie à l'une des revendications 1 à 5 comme agent tensio-actif et notamment comme agent anti-mousse.

8. Utilisation selon la revendication 7 dans le nettoyage des surfaces dures telles que les sols ou les récipients se trouvant notamment au contact de denrées alimentaires.

9. Utilisation selon la revendication 8 lors des étapes de fermentation lors de la production industrielle d'acides aminés, d'acides organiques, d'enzymes ou d'aliments du bétail.

## Patentansprüche

1. Wasserfreie Zusammensetzung (D), die im wesentlichen aus:
a) einer oder mehreren Verbindungen der Formel (III₁)
(G)ₓ-O-R_{A} (III₁)
und
b) einer oder mehreren Verbindungen der Formel (IV₁)
HO-[CH₂-CH(R₁)-O]ₙ-R_{A} (IV₁)
worin:
x für eine Dezimalzahl zwischen 1 und 5 steht;
n für eine ganze Zahl zwischen 1 und 30 steht;
R₁ für ein Wasserstoffatom oder einen Methylrest steht;
G für einen Glucoserest steht und
R_{A} für einen gesättigten oder ungesättigten, linearen oder verzweigten Kohlenwasserstoffrest mit 1 bis 30 Kohlenstoffatomen steht,
besteht und dadurch erhältlich ist, daß man Glucose mit einem Schnitt von Fettalkoholen, der einem Gemisch von Alkoholen der Formel (VI) :
HO-R_{A} (VI)
entspricht, vermischt, wobei man das entsprechende Gemisch (B₁) von Alkylpolyglucosiden der Formel (III₁) und dem Überschuß an dem Schnitt von Fettalkoholen erhält, das Gemisch (B₁) mit einem ausgehend von dem gleichen Schnitt von Fettalkoholen hergestellten Gemisch von alkoxylierten Verbindungen der Formel (IV₁) in einem Gewichtsverhältnis zwischen Verbindungen der Formel (III₁) und Verbindungen der Formel (IV₁) zwischen 0,2 und 5 versetzt, wobei man ein Gemisch (C₁) erhält, und das Gemisch (C₁) neutralisiert und dann zur Entfernung des Überschusses an Alkohol der Formel (VI) einer Destillation unterwirft.

2. Zusammensetzung nach Anspruch 1, in der in der Formel (III₁) x zwischen 1,05 und 2,5 und insbesondere zwischen 1,1 und 2,0 liegt.

3. Zusammensetzung nach Anspruch 1 oder 2, in der in der Formel (IV₁) n kleiner gleich 15 ist.

4. Zusammensetzung nach einem der Ansprüche 1 bis 3, in der in den Formeln (III₁) und (IV₁) R_{A} 6 bis 18 Kohlenstoffatome enthält und insbesondere für einen Hexyl-, Octyl-, Heptyl-, Nonyl-, Decyl-, Undecyl-, Dodecyl-, Tridecyl-, Tetradecyl-, Hexadecyl-, Octadecyl-, Octadecenyl-, Octadecadienyl- oder Octadecatrienylrest steht, wobei diese Reste linear oder verzweigt sein können.

5. Zusammensetzung nach Anspruch 4, enthaltend eine oder mehrere Verbindungen (III₁) und eine oder mehrere Verbindungen der Formel (IV₁), worin in den Formeln (III₁) und (IV₁) der Substituent R_{A} für einen Octyl-, Nonyl-, Decyl- oder 2-Ethylhexylrest steht.

6. Verfahren zur Herstellung der wasserfreien Zusammensetzung (D) nach einem der Ansprüche 1 bis 5, **dadurch gekennzeichnet, daß** man die Glucose in saurem Medium mit einem Überschuß mindestens eines Alkohols der Formel (VI) umsetzt, wobei man das Gemisch (B₁) erhält, welches mindestens eine Verbindung der Formel (III₁) und den Überschuß mindestens eines Alkohols der Formel (VI) enthält, das Gemisch (B₁) mit mindestens einer ausgehend von dem gleichen Schnitt von Fettalkoholen hergestellten Verbindung der Formel (IV₁) in einem Gewichtsverhältnis zwischen Verbindung der Formel (III₁) und Verbindungen der Formel (IV₁) zwischen 0,2 und 5 versetzt, wobei man ein Gemisch (C₁) erhält, und das Gemisch (C₁) neutralisiert und dann zur Entfernung des Überschusses an Alkohol der Formel (VI) einem Destillationsschritt unterwirft.

7. Verwendung der Zusammensetzung nach einem der Ansprüche 1 bis 5 als Tensid und insbesondere als Antischaummittel.

8. Verwendung nach Anspruch 7 bei der Reinigung von harten Oberflächen wie Fußböden oder Behältern, die insbesondere mit Lebensmitteln in Berührung stehen.

9. Verwendung nach Anspruch 8 bei den Fermentationsstufen bei der technischen Herstellung von Aminosäuren, organischen Säuren, Enzymen oder Viehfutter.

## Claims

1. Anhydrous composition (D) composed essentially of:
a) one or more compounds of formula (III₁)
(G)ₓ-O-R_{A} (III₁) (III1)
and
b) one or more compounds of formula (IV₁)
HO-[CH₂-CH(R₁)-O]ₙ-R_{A} (IV₁) (IV1)
x represents a decimal number between 1 and 5,
n is an integer between 1 and 30,
R₁ represents a hydrogen atom or a methyl radical,
G represents the glucose residue,
R_{A} represents a saturated or unsaturated, linear or branched, hydrocarbonaceous radical comprising from 1 to 30 carbon atoms,
which can be obtained by mixing glucose with a fatty alcohol fraction corresponding to a mixture of alcohols of formula (VI):
HO-R_{A} (VI)
in order to form the corresponding mixture (B₁) of alkyl polyglucosides of formula (III₁) and of the excess of the fatty alcohol fraction, and by adding, to the said mixture (B₁), a mixture of alkoxylated compounds of formula (IV₁) prepared from the same fatty alcohol fraction in a ratio by weight of compounds of formula (III₁) to compounds of formula (IV₁) of between 0.2 and 5, in order to form a mixture (C₁) which is neutralized and then subjected to a distillation in order to remove the excess alcohol of formula (VI).

2. Composition according to Claim 1, in which, in the formula (III₁), x is between 1.05 and 2.5 and in particular between 1.1 and 2.0.

3. Composition according to either of Claims 1 and 2, in which, in the formula (IV₁), n is less than or equal to 15.

4. Composition according to one of Claims 1 to 3, in which, in the formulae (III₁) and (IV₁), R_{A} comprises from 6 to 18 carbon atoms and represents in particular a hexyl, octyl, heptyl, nonyl, decyl, undecyl, dodecyl, tridecyl, tetradecyl, hexadecyl, octadecyl, octadecenyl, octadecadienyl or octa-decatrienyl radical, the said radicals being linear or branched.

5. Composition according to Claim 4 comprising one or more compounds of formula (III₁) and one or more compounds of formula (IV₁), in which, in the formulae (III₁) and (IV₁), the substituent R_{A} represents an octyl, nonyl, decyl or 2-ethylhexyl radical.

6. Process for the preparation of the anhydrous composition (D) as defined in one of Claims 1 to 5, **characterized in that** the glucose is reacted in acidic medium with an excess of at least one alcohol of formula (VI), in order to form the mixture (B₁) comprising at least one compound of formula (III₁) and the mixture in excess of at least one alcohol of formula (VI₁), to which mixture (B₁) is added at least one compound of formula (IV₁) prepared from the same fatty alcohol fraction in a ratio by weight of compounds of formula (III₁) to compounds of formula (IV₁) of between 0.2 and 5, in order to form a mixture (C₁) which is neutralized and then subjected to a distillation stage in order to remove the excess alcohol of formula (VI).

7. Use of the composition as defined in one of Claims 1 to 5 as surface-active agent and in particular as antifoaming agent.

8. Use according to Claim 7 in the cleaning of hard surfaces, such as floors, or containers which are in particular in contact with foodstuffs.

9. Use according to Claim 8 during the fermentation stages during the industrial production of amino acids, organic acids, enzymes or livestock fodder.
